# EUROPEAN PATENT SPECIFICATION

(11) **EP 1 951 059 B1**
(45) Date of publication and mention of the grant of the patent: **18.03.2009**
(21) Application number: 06821199.4
(22) Date of filing: 18.10.2006
(51) Int. Cl.: A23C 3/033, A23L 3/01, A23L 3/20

(54) **PLANT FOR TEMPERATURE-CONTROLLED TREATMENT OF FOOD PRODUCTS, SUCH AS MILK OR THE LIKE**
ANLAGE FÜR DIE TEMPERATURKONTROLLIERTE BEHANDLUNG VON NAHRUNGSMITTELPRODUKTEN WIE MILCH ODER DERGLEICHEN
INSTALLATION DE TRAITEMENT A TEMPERATURE REGULEE DE PRODUITS ALIMENTAIRES DONT NOTAMMENT LE LAIT

(30) Priority: 18.10.2005 IT VI20050282
(43) Date of publication of application: 06.08.2008
(73) Proprietor: CFT S.p.A., 43100 Parma (IT); OFFICINE DI CARTIGLIANO S.P.A., 36050 Cartigliano (Vicenza) (IT)
(72) Inventor: ARELLI, Pier Luigi, I-43100 Parma (IT); PACIELLO, Gerardo, I-43100 Parma (IT); POLATO, Antonio, I-36063 Marostica (IT)
(74) Representative: O'Byrne, Daniel Joseph
(86) International application number: PCT/IB2006/053848
(87) International publication number: WO 2007/046067

(56) References cited:
- CH-A- 109 465
- CH-A- 504 844
- DE-A1- 1 492 360
- DE-A1- 1 617 968
- DE-A1- 3 512 451
- DE-A1- 19 615 044
- DE-B- 1 073 446
- DE-B- 1 115 114
- GB-A- 1 119 510
- BIZIAK R B ET AL: "Energy Use for Continuous Thermal Processing of Milk" JOURNAL OF FOOD SCIENCE, INSTITUTE OF FOOD TECHNOLOGISTS, CHICAGO, IL, US, vol. 50, no. 6, November 1985 (1985-11), pages 1607-1610,1614, XP002126993 ISSN: 0022-1147

## Description

### Field of the invention

The present invention generally finds application in the field of food industry systems and particularly relates to a plant for temperature-controlled processing of liquid or semi-liquid food products, such as milk, pulps, sauces, jams or the like.

### Background of the invention

Food products, particularly liquid or semi-liquid products, are known to require certain heat treatments for partial or total destruction of the microbial load, to extend products' *shelf life.*

Such processes stabilize the microbial count for a time that depends on the specific type of treatment, i.e. essentially on the selected time-to-temperature ratio.

On the one hand, a higher temperature is more effective in destroying the microbial flora, on the other hand an excessively long treatment time would tend to degrade most of the nutrients in the product, thereby reducing its organoleptic quality. Thus, treatment times and temperatures have to be mutually adjusted to meet the combined need of obtaining a high quality product with an adequate *shelf life.*

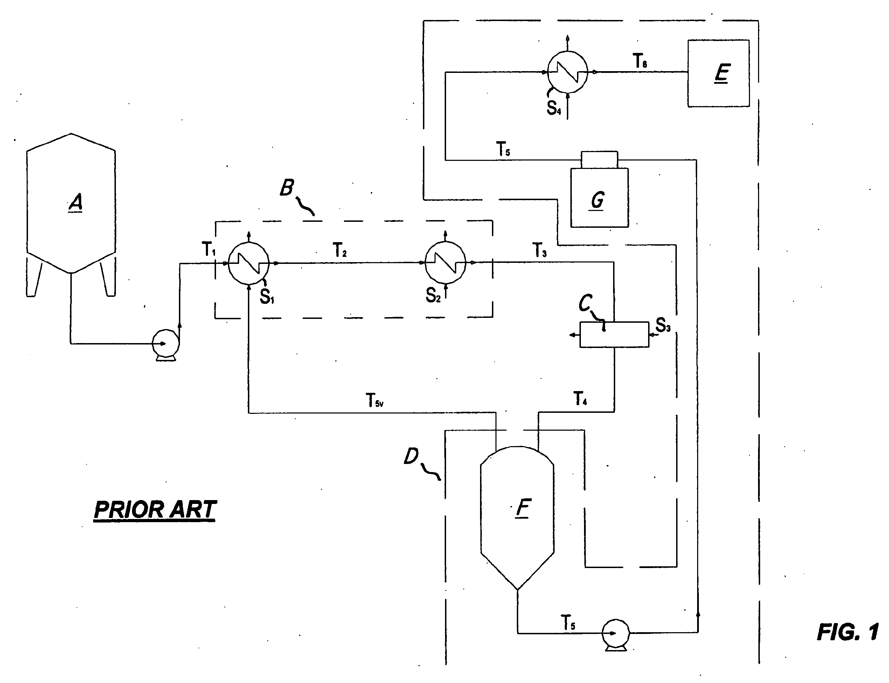

An exemplary know milk sterilization plant is diagrammatically shown in FIG. 1. The plant essentially comprises a tank A, wherefrom the liquid is drawn at a storage temperature T₁ of about 4°C, a preheating section B, in which milk is progressively heated to temperatures T₂ and T₃ of about 75°C and 85°C respectively, by steam flows S₁ and S₂, a unit C for destroying the microbial load, in which milk is heated to a sterilization temperature T₄ of about 150°C by flow S₃, a section D for progressively cooling milk from temperature T₄ to temperatures T₅ and T₆ and a storage tank for the treated milk E.

Particularly, the microbial load destroying unit C may be of the direct type, providing injection of steam S₃ in milk. A flash vaporization unit F, operating by abrupt expansion, is provided upstream of unit C to separate steam from milk. In this unit, the milk added with the steam flow S₃ is subjected to quasi instantaneous expansion, thereby generating a steam flow S₁ at temperature T₅ᵥ, whose latent heat is at least partly also used to preheat the milk in section B, and a flow of "concentrated" milk, cooled to a temperature T₅ of about 80°C. To inhibit separation of milk components after such abrupt expansion, a homogenization unit G is provided downstream of the expansion unit.

While this kind of system has been improved with time to obtain an end product of high organoleptic quality, because direct steam injection can heat milk to the sterilization temperature in a very short time, it still suffers from a few recognized drawbacks.

Firstly, vacuum expansion inevitably causes the loss of many volatile nutrients, such as aromatic nutrients, thereby affecting the end quality of the processed product.

Furthermore, direct contact with milk requires steam to be pretreated to ensure it is as aseptic as possible when it is injected. This process is highly inconvenient and costly. As is known, extraction of all chemical, physical and pathological residues from a gas flow requires highly complex implementations, and the relevant national and international standards are frequently updated, thereby involving higher costs.

Finally, due to the presence of steam in milk, the flash expansion unit F is required to operate under vacuum, so that steam may be almost totally separated from the liquid. As a result, the homogenization step that is always required after such treatments, shall be carried out under high pressure and under aseptic conditions, i.e. by preventing the milk flow from contacting any external pathogenic agents susceptible of polluting it and of nullifying the benefits of the previous sterilization step.

Due to the irreversible heat losses associated with a system of this type, its thermal efficiency is very low, i.e. of the order of 50%, which makes the system unattractive in terms of cost effectiveness.

From CH-A-109465 is known a plant for processing food products having all the features of the preamble of the independent claim 1. In particular, this known plant comprises a storage tank for the product to be processed, an heat exchanger designed to reduce the product microbial load, and an expansion chamber for cooling the product thus treated maintained at atmospheric pressure. These units are reciprocally fluid connected by means of a hydraulic circuit having a return line with an end at the higher portion of the expansion chamber, in such a manner to convey the vapor fraction directly to said storage tank.

### Summary of the invention

The main object of this invention is to overcome the aforementioned drawbacks, by providing a system for temperature controlled processing of food products that is highly efficient and relatively cost effective.

A particular object of the invention is to provide a system whose end product has an optimal organoleptic quality.

A further object is to provide a system that allows to minimize installation and maintenance costs.

Another object is to provide a system in which such installation and maintenance are of the highest simplicity.

Yet another object of the invention is to provide a method for processing food products that minimizes process costs and provides a high quality end product.

Another important object is to provide a system that has a relatively high efficiency and is attractive in terms of cost effectiveness.

These and other objects, as better explained hereinafter, are fulfilled by a plant for processing food products in accordance with claim 1.

Thanks to the particular configuration of the plant according to the invention, the product flowing out of the expansion chamber has a temperature close to the equilibrium temperature corresponding to the pressure in the chamber, so that the processed product will be cooled to a temperature that is higher, than the temperature reached by prior art systems.

It shall be understood that the terms "product flowing out" or "outflowing product", as used herein are intended to designate a fluid composed of a liquid fraction and a vapor fraction, which result from abrupt expansion and have substantially the same temperature.

One feature of the plant according to the invention is that, during expansion, the product is subjected to a lower temperature drop than in the prior art plaints, whereby the loss of volatile nutrients in the liquid fraction is reduced, and the organoleptic quality of the processed product is improved.

Advantageously, the hydraulic circuit may include a return line for putting the expansion chamber in fluid communication with the storage tank, so that the volatile substances lost during expansion may be reintroduced in the inflowing product, thereby improving the final quality thereof.

Since the temperature of the fluid after cooling is still relatively high and has a higher enthalpy as compared with prior art plants, heat can be recovered and applied in the preheating step, thereby considerably increasing the overall system efficiency.

In a preferred, non-exclusive embodiment, the preheating section may include a plurality of preheating units to heat the product from the storage temperature to the intermediate preheating temperature. Advantageously, the return line feeds at least partially the heating circuit of one of the preheating units.

The circuit may further have a final line to put the expansion chamber in fluid communication with a processed product preservation tank, situated downstream of the cooling section.

Conveniently, the final branch line may feed at least partially the cooling circuit of one of the preheating units.

This configuration allows to recover heat from liquid and steam flowing out of the chamber, so that the plant of the invention has a thermal efficiency in the range of 80 - 90%.

It shall be understood that the expression quick heating means of the indirect heat transfer and constant flow type, as used herein, is intended to designate heating means in which the product under treatment is not in direct contact with a fluid at higher temperature, e.g. steam, so that the mass flow of the product is substantially constant from the inlet section to the outlet section, except minor product density variations caused by temperature increase. Obviously, mass flow is constant when considering the product as a whole, i.e. as a sum of the liquid and vapor fractions of the inflowing and/or outflowing product.

The use of indirect heating plants, e.g. of the type with heating plates or with a high frequency electromagnetic field provides considerable advantages in terms of costs and convenience, as no steam treatment and purification arrangements and no aseptically-operating homogenization units is required anymore.

Advantageously, the plant may comprise a product homogenization unit that is included in the preheating section for homogenizing the product upon addition of the steam flow in the storage tank.

### Brief description of the drawings

Further features and advantages of the invention will be more apparent from the detailed description of a preferred, non-exclusive embodiment of a plant according to the invention, which is described as a non-limiting example with the help of the annexed drawings, in which:
FIG. 1 is a schematic view of a prior art food processing plant;
FIG. 2 is a schematic view of a food processing plant according to the invention.

### Detailed description of a preferred embodiment

Referring to the above figures, the plant of the invention, which is generally designated by numeral 1, is particularly suitable for processing food products such as milk, purées, fruit juices or the like. While the following description essentially relates to milk processing, it shall be understood that this example is only provided by way of illustration and without limitation, the plant being suitable to process any kind of food product. By analogies, temperature ranges are only provided as a mere example, and do not limit the inventive concept disclosed in the appended claims.

Basically, the plant comprises a milk storage tank 2, a milk preheating section 3, a heat treatment unit 4 located downstream of the latter and designed to reduce microbial load in milk, and a product cooling section 5 downstream of unit 4. The different plant sections are in fluid connection with each other by means of the hydraulic circuit 6.

In section 3, the product is heated from an initial storage temperature T₁, approximately 4°C, to an intermediate preheating temperature T₄ of about 80°C - 90°C. The so preheated milk flows into unit 4 wherein its temperature is abruptly increased to a treatment value T₅ of about 135°C - 140°C. To perform such heating function, this unit comprises quick heating means of the indirect heat transfer and constant flow type, such as either heat exchanger with heating plates of adequate size, a burner or an electromagnetic field application unit.

In the next cooling section 5, milk at temperature T₅ flows through instant cooling means 7 including an expansion chamber 8 at a pressure Pₑ higher than or equal to atmospheric pressure so that the product flowing out of such expansion chamber 8 has a temperature, T₆ close to the equilibrium temperature corresponding to such pressure Pₑ. The value of T₆ is approximately of 100°C - 105°C.

As is known, after expansion in chamber 8, the outflowing milk is separated into a liquide fraction L and a vapor fraction V, having the same temperature T₆, which are both used to preheat the milk flowing into the unit 4.

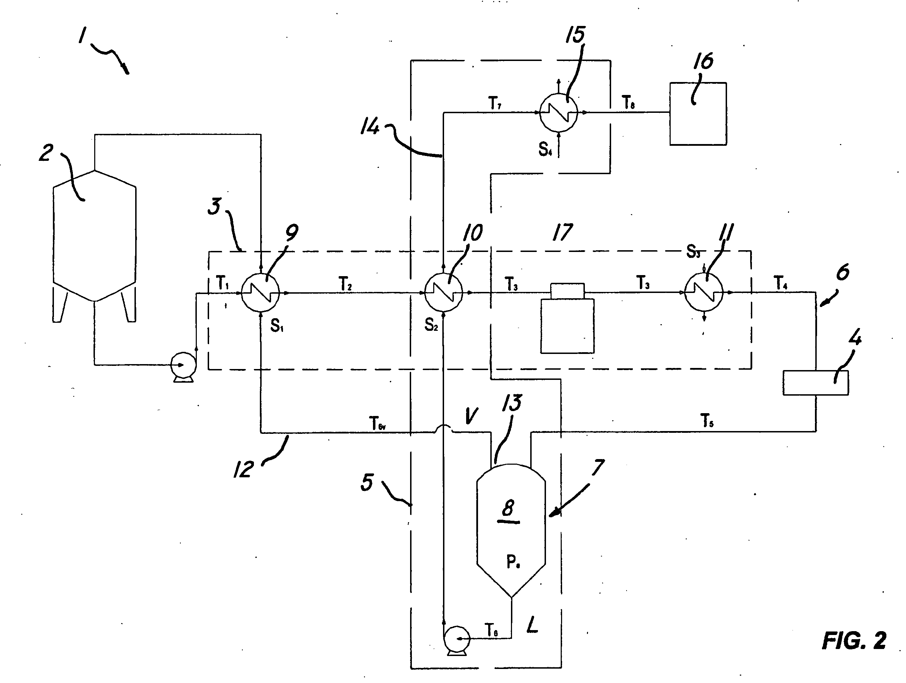

More in detail, as shown in FIG. 2, the preheating section 3 may comprise a plurality of progressive preheating units 9, 10 and 11. In unit 9, milk is heated from a storage temperature T₁ of about 4°C to an intermediate temperature T₂, typically of about 40°C - 50°C, using the heat released to such unit 9 by the flow S₁, essentially consisting of the milk vapor phase V.

For this purpose, the line 12 of the circuit 6 feeds the heating circuit of the unit 9 and connects the chamber 8 to the storage tank 2. Thus, the vapor phase V of milk, e.g. having a temperature of 100°C to 105°C, releases condensation heat to unit 9 through which milk flows coming from tank 2, and increases the temperature of the outflowing milk. The vapor phase V, which is thereby cooled, will be reintroduced in the storage unit 2.

For properly conveying the vapor phase V, the branch line 12 has the end 13 in the higher portion of the expansion chamber 8. An end of the final line 14 of the circuit 6 is located on the bottom of the chamber 8, for conveying the liquid phase L of milk. This phase, in the same manner as described above for unit 9, is feeding the heating circuit of the preheating unit 10 (flow S₂), to increase milk temperature from the value T₂ to a value T₃ of about 70°C - 80°C:

The liquid phase L, which is thus cooled to a temperature T₇ of about 40°C - 50°C, will be cooled to a final preservation temperature T₈, which may be the same as the initial storage temperature, i.e. 4°C, by the flow S₄ in the final cooling unit 15. Milk will be preserved in a tank 16 at this temperature.

In order to homogenize the milk flowing into the unit 4, a product homogenization unit 17 is provided in the preheating section 3, to remove any inhomogeneity in the milk flowing out of the tank 2 due to the addition of the vapor phase V therein.

To heat milk from the temperature T₃ to the temperature T₄, the third preheating unit releases the required heat to the milk by the external flow S₃.

The above disclosure clearly shows that the system of the invention fulfills the intended objects and particularly the object of providing a system whose end product has an optimized organoleptic quality.

Thanks to the combination of quick heating means of the indirect heat transfer and constant flow type, with instant cooling means 7, the product flowing out of the expansion chamber 8 has a temperature T₆ close to the equilibrium temperature corresponding to the pressure Pₑ in the chamber, which provides all the advantages mentioned above.

The plant according to the invention is susceptible of a number of changes and variants falling within the inventive concept as disclosed in the appended claims.

## Claims

1. A plant for temperature-controlled processing of food products, such as milk or the like, comprising:
- at least one storage tank (2) for the product to be processed;
- a preheating section (3) for increasing the product temperature from an Initial storage temperature (T₁) to an intermediate preheating temperature (T₄);
- a heat treatment unit (4) located downstream of said preheating section (3), and designed to reduce the product microbial load by heating it to a treatment temperature (T₆) higher than said preheating temperature (T₄), said heat treatment unit (4) comprising quick heating means of the indirect heat transfer and constant flow type;
- a cooling section (5) downstream of said treatment unit (4) for cooling then heat treated product to a final preservation temperature (T₈), said cooling section comprising Instant cooling means (7) including an expansion chamber (8) wherein the out flowing milk is separated into a liquid fraction (L) and a vapor fraction (V):
- means for maintaining said expansion chamber (8) at a pressure (Pₑ) higher than or equal to atmospheric pressure in such a manner that the product flowing out of said expansion chamber (8) has a temperature (T₈) close to the equilibrium temperature corresponding to said pressure (Pₒ);
- a hydraulic circuit (6) for providing fluid connection of said storage tank (2) with said cooling section (5) passing through said preheating section (3) and said heat treatment unit (4), said hydraulic circuit (6) having a return line (12) with an end (13) at the higher portion of said expansion chamber (8) to convey said vapor fraction (V) to said storage, tank (2);
**characterized in that** said preheating section (3) comprises one or more preheating units (9, 10, 11) located outside of said storage tank (2) for heating the product from said storage temperature (T1) to said intermediate preheating temperature (T₄), said return line (12) being adapted to put said expansion chamber in fluid communication with said storage tank (2) passing through at least one of said preheating units (9), said circuit (6) further having a final line (14) connected to the bottom of said expansion chamber (8) for conveying the liquid fraction (L) to a processed product preservation tank (16) passing through at least one (10) of said preheating units.

2. Plant as claimed in claim 1, **characterized in that** said preheating section (3) comprises a first preheating unit (9, 10) for heating the product from said storage temperature (T₁) to a first preheating temperature (T₂) and a second preheating unit (10) for heating the product from said first preheating temperature (T₂) to a second preheating temperature (T₃) higher than said first preheating temperature (T₂), said, return line (12) being adapted to feed the heating circuit of said first preheating unit (9), said final line (14) being adapted to feed the heating circuit of said second preheating unit (10).

3. Plant as claimed in claim 1, **characterized in that**, said preheating section (3) comprises a third preheating unit (11) for heating the product from second preheating temperature (T₃) to said intermediate preheating temperature (T₄).

4. Plant as claimed in claim 1, **characterized in that** said quick heating means comprise an electromagnetic field application unit.

5. Plant as claimed in claim 1, **characterized in that** it comprises a product homogenization unit (17).

6. Plant as claimed in claim 5, **characterized in that** said homogenization unit (17) is included in said preheating section (3).

## Patentansprüche

1. Anlage für die temperaturkontrollierte Behandlung von Nahrungsmittelprodukten, wie zum Beispiel von Milch oder ähnlichem mit
- mindestens einem Reservoir (2) für das zu behandelnde Produkt,
- einem Vorwärmbereich (3) zum Erhöhen der Produkttemperatur von einer anfänglichen Lagertemperatur (T₁) zu einer zwischenzeitlichen Vorwärmtemperatur (T₄),
- einer Wärmebehandlungseinheit (4), die nach dem Vorwärmbereich (3) angeordnet ist und so ausgelegt ist, dass die Beaufschlagung mit Mikroben vermindert wird durch Erwärmen auf eine Behandlungstemperatur (T₅), die höher ist als die Vorwärmtemperatur (T₄), wobei die Wärmebehandlungseinheit (4) Einrichtungen zum schnellen Erwärmen aufweist von der Art indirekter Wärmeübertragung bei konstanter Strömung,
- einem Kühlbereich (5), der nach der Behandlungseinheit (4) angeordnet ist zum Kühlen des wärmebehandelten Produkts auf eine endgültige Konservierungstemperatur (T₈), wobei der Kühlbereich Einrichtungen (7) zum schnellen Kühlen aufweist mit einer Expansionskammer (8), in der die ausströmende Milch getrennt wird in einen flüssigen Teil (L) und einen Dampfteil (V),
- Einrichtungen zum Halten eines Drucks (P₀) in der Expansionskammer (8), der höher ist oder gleich dem atmosphärischen Druck, auf eine Weise, dass das Produkt, das aus der Expansionskammer (8) strömt, eine Temperatur (T₆) hat, die nahe der Gleichgewichtstemperatur zu dem Druck (P₀) ist,
- einem Hydraulikkreis (6), der eine Verbindung für die Flüssigkeit von dem Reservoir (2) zu dem Kühlbereich (5) schafft, die durch den Vorwärmbereich (3) und die Wärmebehandlungseinheit (4) führt, wobei der Hydraulikkreis (6) einen Rücklauf (12) aufweist mit einem Ende (13) in dem höheren Bereich der Expansionskammer (8), um den Dampfanteil (V) zum Reservoir (2) zu fördern,
**dadurch gekennzeichnet, dass** der Vorwärmbereich (3) eine oder mehrere Vorwärmeinheiten (9, 10, 11) aufweist, die außerhalb des Reservoirs (2) angeordnet sind, um das Produkt von der Lagertemperatur (T₁) auf die zwischenzeitliche Vorwärmtemperatur (T₄) zu erwärmen, wobei der Rücklauf (12) so ausgebildet ist, dass die Expansionskammer eine Verbindung für die Flüssigkeit mit dem Reservoir (2) hat, die durch mindestens eine der Vorwärmeinheiten (9) führt, wobei der Kreis (6) zudem eine Schlussleitung (14) hat, die mit dem Boden der Expansionskammer (8) verbunden ist zum Fördern des flüssigen Anteils (L) zu einem Vorratsbehälter (16) für bearbeitete Produkte, die durch mindestens eine (10) der Vorwärmeinheiten führt.

2. Anlage gemäß Anspruch 1, **dadurch gekennzeichnet, dass** der Vorwärmbereich (3) eine erste Vorwärmeinheit (9, 10) aufweist, um das Produkt von der Lagertemperatur (T₁) auf eine erste Vorwärmtemperatur (T₂) zu erwärmen und eine zweite Vorwärmeinheit (10), um das Produkt von der ersten Vorwärmtemperatur (T₂) auf eine zweite Vorwärmtemperatur (T₃) zu erwärmen, die höher ist als die erste Vorwärmtemperatur (T₂), wobei der Rücklauf (12) so ausgebildet ist, dass der Wärmekreislauf der ersten Vorwärmeinheit (9) versorgt wird und die Schlussleitung (14) so ausgebildet ist, dass der Wärmekreislauf der zweiten Vorwärmeinheit (10) versorgt wird.

3. Anlage gemäß Anspruch 1, **dadurch gekennzeichnet, dass** der Vorwärmbereich (3) eine dritte Vorwärmeinheit (11) aufweist, um das Produkt von der zweiten Vorwärmtemperatur (T₃) auf die zwischenzeitliche Vorwärmtemperatur (T₄) zu erwärmen.

4. Anlage gemäß Anspruch 1, **dadurch gekennzeichnet, dass** die Einrichtungen zum schnellen Erwärmen eine Einheit mit elektromagnetischem Feld aufweisen.

5. Anlage gemäß Anspruch 1, **dadurch gekennzeichnet, dass** eine Homogenisierungseinheit (17) für das Produkt vorgesehen ist.

6. Anlage gemäß Anspruch 5, **dadurch gekennzeichnet, dass** die Homogenisierungseinheit (17) in dem Vorwärmbereich (3) enthalten ist.

## Revendications

1. Installation pour le traitement contrôlé en température de produits alimentaires, comme le lait ou analogues, comprenant :
- au moins un réservoir de stockage (2) pour le produit à traiter ;
- une station de préchauffage (3) destinée à faire croître la température du produit d'une température de stockage initiale (T₁) à une température de préchauffage intermédiaire (T₄) ;
- une unité de traitement par la chaleur (4) située en aval de ladite section de préchauffage (3) et conçue pour réduire la charge microbienne du produit en chauffant ce dernier à une température de traitement (T₅) supérieure à ladite température de préchauffage (T₄), ladite unité de traitement par la chaleur (4) comprenant des moyens de chauffage rapide du type à transmission indirecte de la chaleur et à circulation constante ;
- une section de refroidissement (5) en aval de ladite unité de traitement (4) destinée à refroidir le produit traité par la chaleur à une température de conservation finale (T₈), ladite section de refroidissement comprenant des moyens de refroidissement instantané (7) qui comprennent une chambre d'expansion (8) dans laquelle le lait sortant est séparé en une fraction liquide (L) et une fraction vapeur (V) ;
- des moyens destinés à maintenir ladite chambre d'expansion (8) à une pression (Pₑ) supérieure ou égale à la pression atmosphérique, de telle manière que le produit sortant de ladite chambre d'expansion (8) ait une température (T₆) proche de la température d'équilibre qui correspond à ladite pression (Pₑ) ;
- un circuit hydraulique (6) destiné à établir une liaison fluidique entre ledit réservoir de stockage (2) et ladite section de refroidissement (5) en passant à travers ladite section de préchauffage (3) et ladite unité de traitement par la chaleur (4), ledit circuit hydraulique (6) ayant une conduite de retour (12) qui présente une extrémité (13) à la partie haute de ladite chambre d'expansion (8) et qui sert à envoyer ladite fraction vapeur (V) audit réservoir de stockage (2) ;
**caractérisée en ce que** ladite section de préchauffage (3) comprend une ou plusieurs unités de préchauffage (9, 10, 11) situées en dehors dudit réservoir de stockage (2) et destinées à chauffer le produit de ladite température de stockage (T₁) à ladite température de préchauffage intermédiaire (T₄), ladite conduite de retour (12) étant adaptée pour mettre ladite chambre d'expansion en communication fluidique avec ledit réservoir de stockage (2) en passant à travers au moins une desdites unités de préchauffage (9), ledit circuit (6) ayant en outre une conduite terminale (14) reliée à la partie basse de ladite chambre d'expansion (8) et destinée à envoyer la fraction liquide (L) à un réservoir (16) de conservation du produit traité en passant à travers au moins une (10) desdites unités de préchauffage.

2. Installation selon la revendication 1, **caractérisée en ce que** ladite section de préchauffage (3) comprend une première unité de préchauffage (9, 10) destinée à chauffer le produit de ladite température de stockage (T₁) à une première température de préchauffage (T₂) et une seconde unité de préchauffage (10) destinée à chauffer le produit de ladite première température de préchauffage (T₂) à une seconde température de préchauffage (T₃) supérieure à ladite première température de préchauffage (T₂), ladite conduite de retour (12) étant adaptée pour alimenter le circuit de chauffage de ladite première unité de préchauffage (9), ladite conduite terminale (14) étant adaptée pour alimenter le circuit de chauffage de ladite seconde unité de préchauffage (10).

3. Installation selon la revendication 1, **caractérisée en ce que** ladite section de préchauffage (3) comprend une troisième unité de préchauffage (11) destinée à chauffer le produit de la seconde température de préchauffage (T₃) à ladite température de préchauffage intermédiaire (T₄).

4. Installation selon la revendication 1, **caractérisée en ce que** lesdits moyens de chauffage rapide comprennent une unité d'application de champ électromagnétique.

5. Installation selon la revendication 1, **caractérisée en ce qu'**elle comprend une unité d'homogénéisation du produit (17).

6. Installation selon la revendication 5, **caractérisée en ce que** ladite unité d'homogénéisation (17) est incluse dans ladite section de préchauffage (3).
